# EUROPEAN PATENT SPECIFICATION

(11) **EP 2 091 682 B1**
(45) Date of publication and mention of the grant of the patent: **12.09.2012**
(21) Application number: 07815571.0
(22) Date of filing: 16.11.2007
(51) Int. Cl.: B25H 3/00, B23B 31/12

(54) **AN APPARATUS FOR FACILITATING AN IN USE CONNECTION OF AN ACCESSORY AND A DRILL**
VORRICHTUNG ZUR ERLEICHTERUNG DER VERBINDUNG EINES ZUBEHÖRTEILS UND EINES BOHRERS IM GEBRAUCH
APPAREIL FACILITANT LE BRANCHEMENT LORS DE L'UTILISATION D'UN ACCESSOIRE ET D'UNE PERCEUSE

(30) Priority: 16.11.2006 AU 2006906390
(43) Date of publication of application: 26.08.2009
(73) Proprietor: Demain Technology Pty Ltd., Heatherton, VIC 3202 (AU)
(72) Inventor: SCRIMSHAW, David Leigh, Beaumaris, Victoria 3193 (AU); VAN DER LINDE, Ben L., Narre Warren South, Victoria 3805 (AU); CONNOR, Paul Francis, Elwood, Victoria 3184 (AU); DAVIES, Paul Edward, Belgrave, Victoria 3160 (AU); MILLER, Paul, Upwey, Victoria 3158 (AU)
(74) Representative: Grund, Martin
(86) International application number: PCT/AU2007/001768
(87) International publication number: WO 2008/058345

(56) References cited:
- EP-B1- 0 155 996
- EP-B1- 0 349 951
- WO-A1-2005/072915
- US-A1- 2003 079 580
- US-A1- 2004 222 115

## Description

### FIELD OF THE INVENTION

The present invention rotates to drills and accessories for use with drills, in particular, power drills.

### BACKGROUND

Existing power drills usually have an adjustable chuck comprised of three jaws for gripping an accessory such as a drill bit. The chuck jaws are adjustable to suit drill bits of various sizes, and in some cases such adjustment is carried out by use of a key. In other cases, it is carried out by manually twisting an outer sleeve of the chuck or alternatively the user grips the outer sleeve to apply a resistance force to the outer sleeve while the drill is activated so as to rotate the jaws relative to the sleeve and thereby tighten the jaws around the drill bit. Other arrangements incorporating an automatic chuck adjustment system have an adjustment mode in which activation of the drill in forward and reverse directions causes adjustment of the chuck and an in use mode in which activation of the drill in forward and reverse directions does not cause adjustment of the chuck, US 2004222115 discloses a drill and driver bit dispensing system, according to the preamble of claim 1.

When connecting an accessory such as a drill bit to the chuck of a power drill it is necessary to align the axis of the drill bit and the axis of rotation of the chuck. This is so that when the chuck is tightened around the drill bit and the drill is activated the drill bit will rotate about a stationary axis and will be effective for drilling. If the axis of the drill bit is not aligned with the axis of rotation of the chuck then when the drill is activated the axis of the drill bit will not be stationary, rather it will rotate about the axis of rotation of the chuck and the drill bit will not be entirely effective for drilling.

Previously it has been necessary to align the axis of a drill bit and the axis of rotation of a drill chuck by hand and eye. This process typically involves placing the drill bit by hand in a position in which the user estimates that the axes of the drill bit and the chuck are aligned. Then the user tightens the chuck jaws around the drill bit using any suitable means. Frequently the user inaccurately aligns the axes in which case the chuck jaws must be loosened, the drill bit readjusted and the chuck jaws tightened again. It is not uncommon for this process to be repeated several times before the user is satisfied that the axes of the drill bit and the chuck are aligned.

The process discussed above relates to facilitating an in use connection of a drill and an accessory such as a drill bit. When such an accessory is removed from such connection with a drill it is advantageous for the drill bit to be storable in a convenient and efficient manner. Existing means of storing or holding such accessories include relatively simple sleeves, cases or various packaging with a facility for holding the accessory. When a user wishes to store or connect an accessory to a drill for use the accessory must be inserted and removed from the holding facility by hand.

Accessories other than drill bits may also be connected to a drill for use therewith. One such accessory includes a drill guide which can ensure that a hole created by the drill has a predetermined depth. Another accessory includes a light that enables accurate drilling in low light conditions. Such accessories are typically connected to a drill by hand or are built into the drill for use therewith. Alignment of accessories such as drill guides and lights, when connected to a drill, is not as important as it is for drill bits. What is important is that such accessories can be conveniently stored and connected to a drill for use therewith.

### SUMMARY OF THE INVENTION

It would be advantageous to provide an improvement over existing means for connecting accessories to drills such as those set out above. It would also be advantageous to provide an improvement over existing means for holding such accessories when not in use.

The present inventions relates to an apparatus (10) for facilitating an in use connection of an accessory (20) and a drill (100), the apparatus including: a plurality of accessory holders (30), each accessory holder for holding an accessory (20); a plurality of drill engaging means (40), each one of the drill engaging means being adapted for engaging a drill (100) and for positioning a respective one of the accessory holders (30) relative to the drill (100) whereby the accessory (20) held by the accessory holder (30) is positioned for in use connection to the drill (100); the apparatus characterized by: an end face including a plurality of openings, each opening for insertion and withdrawal of an accessory therethrough, each one of the accessory holders extending from a respective one of the openings in the end face.

In one form, the drill engaging means is adapted to engage the drill for positioning the accessory holder in a predetermined orientation relative to the drill. In a particularly preferred form, the accessory holder is a drill bit holder configured for holding a drill bit having an axis and the drill engaging means engages the drill for positioning the accessory holder relative to a rotatable chuck of the drill whereby the drill bit held by the drill bit holder is positioned with the axis of the drill bit in alignment with an axis of rotation of the chuck.

In another form of the invention the drill engaging means is adapted to engage a housing of the drill. Preferably, the drill engaging means is adapted to engage a nose portion of the drill.

In a form of the invention, the accessory holder has an axis and the drill engaging means is disposed radially to the axis of the accessory holder. Preferably, the accessory holder has an opening for receiving the accessory and the drill engaging means includes projections disposed around the opening of the accessory holder. The apparatus may also have two opposing ends and the accessory holder may have the opening at either end of the apparatus.

Preferably, the apparatus includes a plurality of radially positioned accessory holders and alternate accessory holders have their openings at each of the ends of the apparatus. More preferably, the apparatus further includes an accessory retaining member for preventing unwanted removal of the accessory from the accessory holder.

In a preferred form, the drill engaging means is adapted to engage the drill adjacent to a jaw of a rotatable chuck of the drill. Preferably, the drill engaging means is adapted to engage an extension of the drill housing that extends around the chuck. Furthermore, the drill engaging means may include projections or recesses that are receivable by projections or recesses associated with the drill and the apparatus may include an end face with the projections upstanding therefrom.

In another preferred form, the apparatus includes a means for sharpening the accessory when the accessory is moved relative to the accessory holder. Yet more preferably, the means for cleaning the accessory cleans the accessory when the accessory is received by or removed from the accessory holder. A preferred form of the means for cleaning the accessory includes bristles disposed adjacent to the opening of the accessory holder.

In another aspect, the invention includes a drill suitable for use with embodiments of the apparatus set out above, wherein the drill is engageable by the drill engaging means of the apparatus for positioning the accessory holder relative to the drill whereby the accessory held by the accessory holder is positioned for in use connection to the drill.

Preferably, the drill has a housing that is engageable by the drill engaging means at a portion of the housing located adjacent to a rotatable chuck of the drill. The portion of the housing located adjacent to the rotatable chuck of the drill may be an extension of the drill housing that surrounds the chuck. The extension of the drill housing that surrounds the chuck may also include projections or recesses for receiving projections or recesses associated with the drill engaging means. In a preferred form, the projections or recesses of the extension of the drill housing are disposed on a surface of the extension facing the chuck.

In another form, the portion of the housing located adjacent to the chuck of the drill includes a means for connection with an accessory for use with the drill. In one form, the means for connection with an accessory for use with the drill is a threaded surface for connection with a threaded surface of an [is adapted to]₂ accessory. The accessory may be selected from a group including but not limited to a leveling accessory, a lighting accessory, an alignment accessory, a metal detecting accessory and a plunge control accessory.

### BRIEF DESCRIPTION OF THE DRAWINGS

It will be convenient to hereinafter describe the invention in detail with reference to the attached drawings that illustrate a preferred embodiment of an apparatus in accordance with the invention. It should be appreciated, however, that the generality of the preceding portion of the specification is not to be superseded by the specifics of the following description.
Figure 1 illustrates a perspective view of a preferred embodiment of an apparatus in accordance with a preferred form of the invention, the apparatus including a housing containing a plurality of accessory holders and accessories, in the form of drill bits, held therein, a drill engaging means and an accessory retaining member in a position enabling access to the drill bits.
Figure 2 illustrates a side view of the apparatus of Figure 1.
Figure 3 illustrates a side section view of the apparatus of Figure 1 and a side view of a hand held power drill prior to engagement of the drill engaging means and the drill, the side section view of the apparatus showing an accessory holder holding an accessory in the form of a drill bit.
Figure 4 illustrates a side section view of the apparatus of Figure 1 and a side view of the drill of Figure 3 with the drill engaging means of the apparatus in engagement with the drill for positioning an accessory holder relative to the drill whereby the drill bit is positioned for in use connection to the drill.
Figure 5 illustrates a side section view of the apparatus of Figure 1 and a side view of the drill of Figure 3 after connection of the drill bit to the drill and partial withdrawal of the drill bit from the accessory holder resulting from disengagement of the drill engaging means and the drill.
Figure 6 illustrates a side section view of the apparatus of Figure 1 and a side section view of the drill of Figure 3 with the drill engaging means of the apparatus in engagement with the drill for positioning an accessory holder relative to the drill whereby the drill bit is positioned for in use connection to the drill.
Figure 7 illustrates a partially exploded perspective view of a plurality of accessory holders of another preferred embodiment of the apparatus of the invention wherein the housing has been removed and one of the accessory holders, a drill engaging means and an accessory retaining member are disassembled.
Figure 8 illustrates a top view of the accessory holders of Figure 7.
Figure 9 is a side view of a cross section of the accessory holders of Figure 8 taken along the plane X-X.
Figure 10 is an enlarged view of a portion Z of one of the accessory holders of Figure 9.

### DETAILED DESCRIPTION

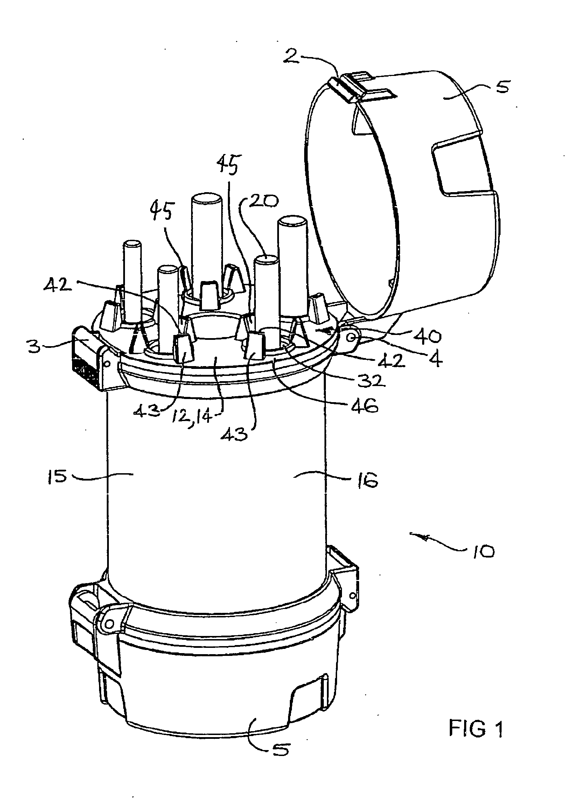

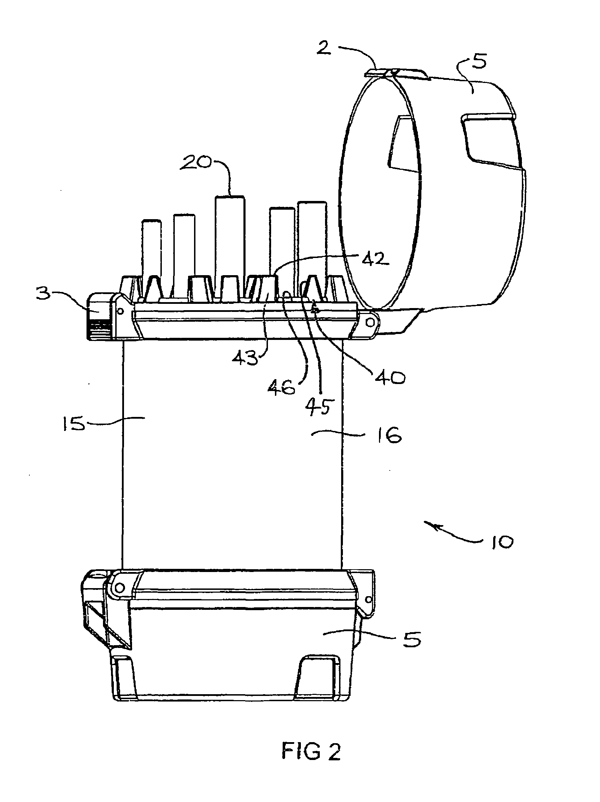

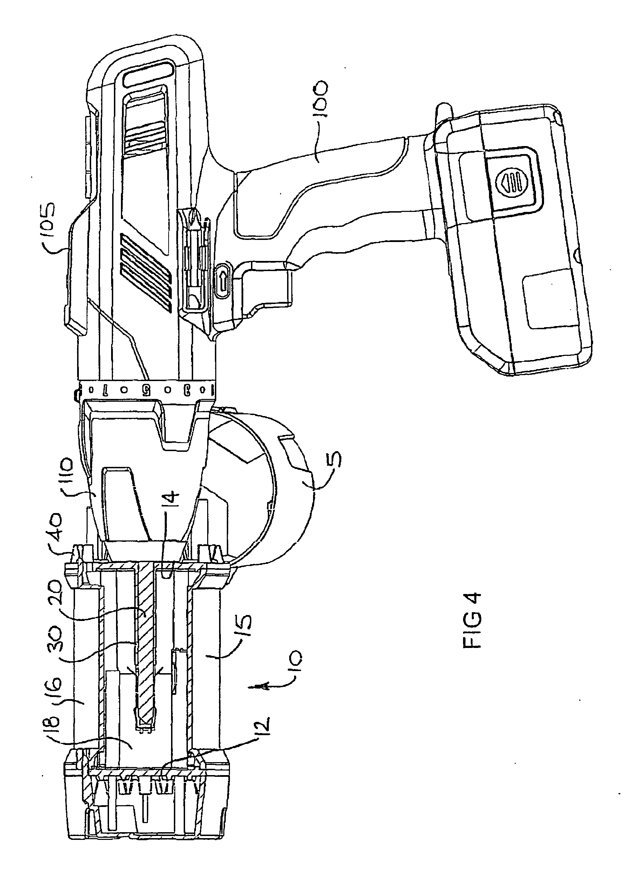

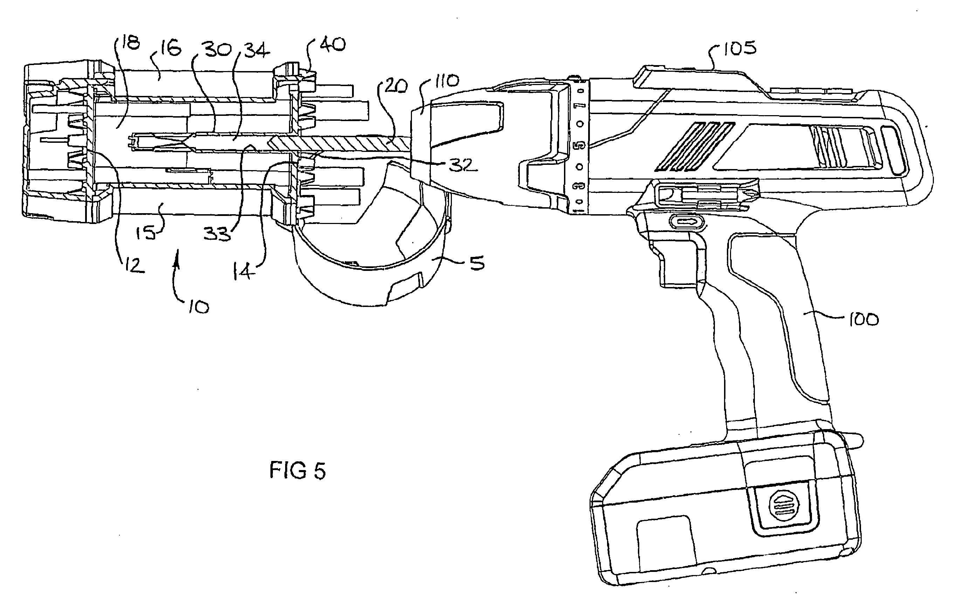

Referring to Figures 1 to 6 there is shown an apparatus 10 for facilitating an in use connection of an accessory in the form of a drill bit 20 and a drill 100. The apparatus 10 has a generally cylindrically shaped housing 15 having two end surfaces 12, 14 that are spaced apart and connected by a cylindrically shaped wall 16. However, it is to be appreciated that the apparatus 10 can have any desirable shape or overall configuration, be it a cube, a rectangular prism or the like. The spaced apart end surfaces 12, 14 and cylindrical wall 16 define an internal space 18 of the apparatus 10.

The apparatus 10 further includes an accessory holder 30 for holding the drill bit 20 or other form of accessory. The accessory holder 30 includes a passage 34 defined by a cylindrical wall 33 extending from an opening 32 in an end face 14, 12 of the apparatus 10 and into the internal space 18 of the apparatus 10. The passage 34 may have any suitable shape or configuration depending on the nature of the accessory 20 to be held therein. In the embodiment illustrated the accessory 20 is a drill bit which has a generally cylindrical form and as such a generally cylindrical passage 34 is suitable. However, an irregular shaped passage 34 may be suitable for drill bits of certain kinds or for holding other accessories for connection to the drill 100 such as a drill guide, a lighting device or the like. The drill bit 20 is locatable in the accessory holder 30 such that a portion of the shank of the drill bit 20 protrudes from the opening 32. The accessory holder 30 may also include a sharpening element that is operable for sharpening the drill bit 20 or other accessory when moved relative to the accessory holder 30 such as during insertion and removal from the accessory holder 30. The sharpening element may alternatively be located elsewhere on the apparatus 10, and is not limited to being located in the accessory holder 30.

The apparatus 10 further includes an accessory retaining device in the form of a cup shaped lid 5 pivotally attached via a hinge 4 to the cylindrically shaped wall 16 adjacent to each of the end faces 12, 14 of the apparatus 10. The lid 5 also includes a latch mechanism 2, 3 for retaining the lid in a closed position in which the lid 5 encloses the end faces 12, 14 of the apparatus 10 and the shanks of the drill bits 20 protruding from he respective end face 12, 14 of the apparatus enclosed by the lid 5. Thus, in the closed position the lid 5 prevents unwanted removal of the drill bit 20 or other accessory from the accessory holder 30.

The apparatus 10 includes a plurality of accessory holders 30 located radially as best illustrated in Figure 1. Accordingly, the openings 32 of each accessory holder 30 are also located radially on the end face 12, 14 of the apparatus 10. While a plurality of accessory holders 30 have their openings 32 on one face 12, 14 another plurality of the accessory holders 30 have their openings 32 on the other one of the end faces 12, 14. The accessory holders 30 are located and configured such that successive accessory holders 30 have their opening 32 at opposite end faces 12, 14. This may ensure that around each opening 32 on an end face 12, 14 there is sufficient room for the location of a drill engaging means 40.

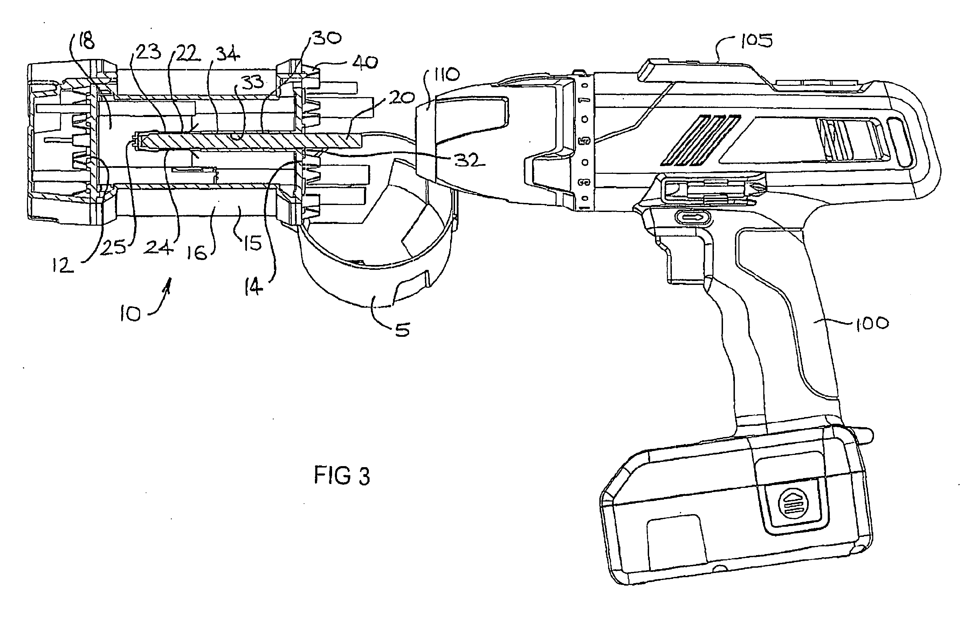

The drill engaging means 40, as is best shown in Figure 1, includes a plurality of projections 42 that are upstanding from an end face 12, 14 of the apparatus 10. In the illustrated embodiment there are three such projections 42 that are triangular shaped and that are disposed radially around each opening 32 of each accessory holder 30. Although the projections 42 in the illustrated embodiment are triangular shaped this is not essential and any suitable shape serving purpose of the projections 42 described below will suffice. Between adjacent projections 42 there is a flat surface or recess 46. When the nose portion of the drill 100 of Figure 3 is moved towards and into contact with the end face 12, 14 of the apparatus the projections 42 and the recesses 46 of the drill engaging means 40 engage a nose portion 100 of a housing 105 of the drill 100 or a suitably shaped chuck 120, or portion thereof, to thereby position the accessory holder 30 relative to the drill 100 whereby the drill bit 20 or other accessory held by the accessory holder 30 is positioned for in use connection to the drill 100.

In the illustrated embodiment in which the accessory is a drill bit 20, positioning of the drill bit 20 for in use connection with the drill 100 involves positioning the drill bit 20 relative to an adjustable chuck 120 of the drill 100. The adjustable chuck 120 of the drill 100 is coupled to a drive means 107 for driving rotation of the chuck 120 about an axis of rotation. The chuck 120 includes a plurality of chuck jaws 122 mounted to a head portion 130 in an angular orientation relative to the axis of rotation of the chuck 120. Each jaw 122 has a gripping face 123 adapted to clamp against the shank of the drill bit 120 or like accessory. Adjustment means are provided to enable the jaws 122 to move as required to adjust to the diameter of the drill bit 20 to be gripped.

Each jaw 122 is slidably mounted to the head portion 130 of the chuck 120 so as to be movable relative to the head portion 130 on a path that is angularly displaced relative to the axis of rotation of the chuck 120. The adjusting means includes an adjusting nut 124 and the head portion 130 rotatably mounted and meshing with each jaw 122 through a thread or worm connection. The arrangement is such that rotation of the head portion 130 relative to the nut 124 and the jaws 122 moves the gripping face 123 of each jaw 122 towards or away from the axis of rotation of the chuck 120 while simultaneously projecting each jaw 122 outwardly or retracting each jaw 122 inwardly relative to the head portion 130 of the chuck 120.

When the drill bit 20 is to be inserted between the jaws 122 for gripping by the gripping face 123 of each jaw 122 the head portion 130 is rotated relative to the adjustment nut 124 and the jaws 122 such that each jaw 122 moves away from the axis of rotation of the chuck 120 and retracts inwardly relative to the head portion 130. The shank of the drill bit 20 may then be inserted between the jaws 122 and the head portion 130 of the chuck 120 rotated relative to the adjustment nut 124 in the reverse direction such that the jaws 122 move towards the axis of rotation of the chuck 120 and project outwardly relative to the head portion 130 and clamp the bit between the gripping faces 123 of the jaws 122.

It is necessary to align the axis of the drill bit 20 and the axis of rotation of the chuck 120 for when the bit 20 is connected to the drill 100 in the manner described above for use therewith. This is so that when the drill bit 20 is in an in use connection with the drill 100 which is then operated the chuck 120 and the drill bit 20 will rotate about a stationary axis and will be effective for drilling. If the axis of the drill bit 20 is not aligned with the axis of rotation of the chuck 120 then when the drill 100 is operated the axis of the drill bit 20 will not be stationary. Instead it will rotate about the axis of rotation of the chuck 120 and the drill bit 20 will not be entirely effective for drilling if at all.

Previously it has been necessary to align the axis of the drill bit 20 and the axis of rotation of a chuck 120 by hand and eye. This process typically involves placing the drill bit 20 by hand in a position in which the user estimates that the axes of the drill bit 20 and the chuck 120 are aligned. Then the user adjusts the chuck 120 so that the jaws 122 grip the drill bit 20. Frequently the user inaccurately aligns the axes in which case the chuck 120 must be adjusted to release the bit 20 from the jaws 122, the drill bit 20 readjusted, and the chuck 120 and jaws 122 tightened again. It is not uncommon for this process to be repeated several times before the user is satisfied that the axes of the drill bit 20 and the chuck 120 are aligned. The drill engaging means 40 of the apparatus 10 does away with the inadequate process whereby a user must position a drill bit 20 by hand and readjust the chuck 120 several times to align the axes of the drill bit 20 and the chuck 120.

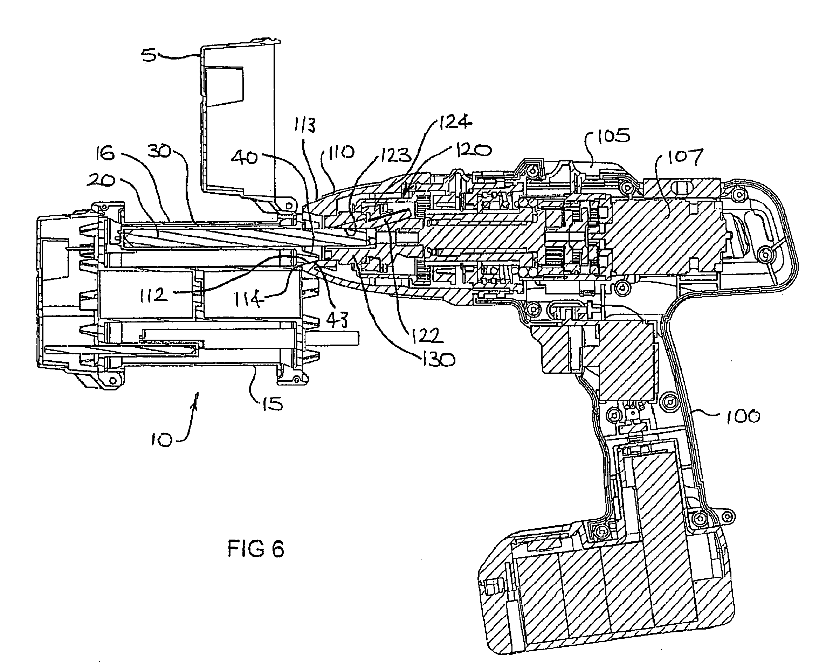

As is best shown in Figure 6, the drill 100 has a housing 105 incorporating a nose portion 110. The nose portion 110 is an extension of the housing 105 that surrounds the chuck 120 and the jaws 122 thereof. The nose portion 110 terminates at an annular end face 114 that adjoins a chuck facing surface 112 of the nose portion 110. The chuck facing surface 112 has a truncated cone shape which increases in diameter approaching the annular end face 114. Each of the triangular shaped projections 42 has an outwardly facing surface 43 and an inwardly facing surface 45. The plurality of triangular shaped projections 42 that are upstanding from the end face 12, 14 of the apparatus 10 are insertable into the nose portion 110 of the drill 100 such that the outwardly facing surfaces 43 of the projections 42 locate against the chuck facing surface 112 of the nose portion 110 of the drill 100. The end face 114 of the nose portion 110 abuts against the end surface 12, 14 of the apparatus 10 immediately adjacent to where the projections 42 upstand therefrom. The result of the projections 42 locating against the chuck facing surface 112 and the end face 114 of the nose portion 110 abutting against the end surface 12, 14 of the apparatus 10 is that the axis of rotation of the chuck 120 is aligned, in an accurate manner, in a predetermined orientation and position relative to the accessory holder 30.

The accessory holder 30 will have a central longitudinal axis and in the case where the accessory holder 30 includes a passage 34 defined by the cylindrical wall 33 the accessory holder 30 will have a central longitudinal axis which is a central longitudinal axis of the cylindrical wall 33. Accordingly, a form of the engagement means 40 may enable the axis of rotation of the chuck 120 to be aligned with the central longitudinal axis of the accessory holder 30. Where the accessory holder 30 contains an accessory such as a drill bit 20, the engagement means may enable the axis of rotation of the chuck 120 and a central longitudinal axis of the drill bit 20 held by the accessory holder 30 to be aligned and with a portion of the shank of the drill bit 20 inserted into the chuck and located between the jaws 122 thereof. With the drill bit 20 positioned for in use connection to the drill 100 the chuck 120 may be adjusted by any suitable means such that the gripping surfaces 123 of the jaws 122 grip the drill bit 20. Where the apparatus 10 is arranged such that the drill bit 20 is positioned with the central longitudinal axis of the drill bit 20 and the axis of rotation of the chuck 120 in alignment then the chuck 120 need only be adjusted once. This is because the apparatus 10 will have achieved appropriate alignment of the central longitudinal axis of the drill bit 20 and the axis of rotation of the chuck 120 without the need for readjustment.

It is to be appreciated that the invention relates to the principle of providing the apparatus 10 with an arrangement of the drill engaging means 40 that provides for engagement with the drill 100 so as to position the accessory holder 30 relative to the drill 100 whereby the accessory, such as a drill bit 20, held by the accessory holder 30 is positioned for in use connection to the drill 100. Accordingly, the invention is not limited to any particular arrangement of the drill engaging means 40.

Another possible arrangement of the drill engaging means 40, not shown in the Figures, may include providing an enlarged portion of the passage 34 of the accessory holder 30 in the region of the opening 32 for receiving the jaws 122 of a standard drill 100 while a portion of the chuck 120 abuts directly against a level surface surrounding the opening 32. As long as there is engagement between the apparatus 10 and the drill 100 whereby the accessory, such as a drill bit 20, is positioned for in use connection to the drill 100 then the invention may encompass such an arrangement. Thus, in another form, the projections 42 may be elongated to such an extent that they extend over the chuck 120 and directly engage the housing 105 of the drill 100 such that an accessory, such as a drill bit 20, is positioned for in use connection to the drill 100.

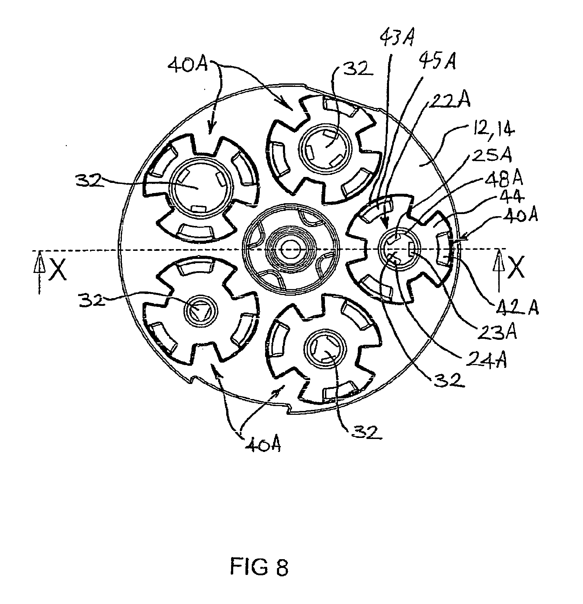

In the embodiments of the apparatus 10 shown in Figures 3 to 11, the apparatus 10 also includes an accessory gripping member 22, 22A. In the embodiment of the apparatus 10 shown in Figures 1 to 6, the gripping member 22 includes a pair of resiliently flexible arms 23, 24 joined by a web 25 so as to provide the gripping member 22 with a generally u-shaped profile. The gripping member is located in the passage 34 of the accessory holder 30 distally from the opening 32. The arms 23, 24 are flared at their free ends. Insertion of the drill bit 20 or other accessory into the passage 34 the bit 20 results in the flared free ends of the arms 23, 24, which are wider than the drill bit 20, being forced apart as the drill bit 20 moves deeper into the gap between the arms 23, 24 which is, apart from the flared free ends, narrower than the drill bit 20. When the drill bit 20 is inserted deeply enough the drill bit 20 is held in position in an interference fit between the resiliently flexible arms 23, 24 whereby the drill bit 20 is securely retained in position.

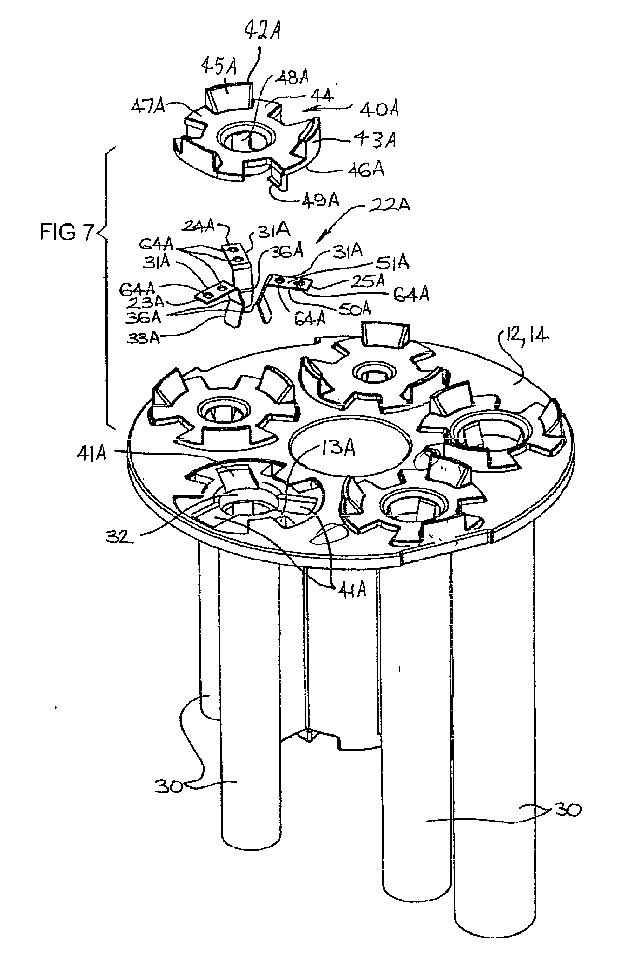

Figures 7 to 10 illustrate an alternative embodiment of an accessory gripping member 22A to the embodiment of the gripping member 22 illustrated in Figures 1 to 6. Where components of the two embodiments illustrated in Figures 1 to 6 and in Figures 7 to 10 are not significantly different then common reference numerals have been used. Where components of the two embodiments illustrated in Figures 1 to 6 and in Figures 7 to 10 are different then the reference numerals that have been used to identify those components in the embodiment illustrated in Figures 7 to 10 differ from the reference numerals that have been used to identify those components in the embodiment illustrated in Figures 1 to 6 by the addition of an "A" to the reference numeral.

The gripping member 22A includes three resiliently flexible arms 23A, 24A, 25A that are located in the passage 34 of the accessory holder 30 proximally to the opening 32. The location of the three resiliently flexible arms 23A, 24A, 25A in the passage 34 proximally to the opening 32 in the embodiment illustrated in Figures 7 to 10 contrasts with the location of the resiliently flexible arms 23, 24 distally from the opening 32 in the embodiment illustrated in Figures 1 to 6. In the embodiment illustrated in Figures 7 to 10 the arms 23A, 24A, 25A each have a supporting end 31 A and an accessory engaging end 33A extending substantially perpendicularly from the supporting end 31A. Thus, each one of the arms 23A, 24A, 25A has a substantially L-shape configuration.

The supporting end 31 A of each one of the arms 23A, 24A, 25A is configured to be positioned in one of a plurality of recesses 41 A located about the opening 32 in one of the end faces 12, 14 of the of the apparatus 10. The supporting end 31 A of each one of the arms 23A, 24A, 25A is a flat member having a lower surface 50A and an opposite upper surface 51 A. When an arm 23A, 24A, 25A is positioned in one of the recesses 41 A the lower surface 50A comes into face to face engagement with the recess 41 A. The upper surface 51 A of the supporting end 31 A faces away from the recess 41 A for face to face engagement with a drill engaging means 40A which is substantially the same as the drill engaging means 40 of the embodiment of the apparatus 10 shown in Figures 1 to 6.

As can be seen in Figure 7, each one of the drill engaging means 40A includes triangular shaped projections 42A upstanding from a planar base portion 44A. The triangular shaped projections 42A upstanding from a planar base portion 44A of the drill engaging means 40A serve the same function as the triangular shaped projections 42 upstanding from the end faces 12, 14 of the embodiment of the of the drill engaging means 40 illustrated in Figures 1 to 6. In particular, when the nose portion of the drill 100 is moved towards and into contact with the end face 12 planar base portion 44A the projections 42A of the drill engaging means 40A engage the nose portion 100 of the housing 105 of the drill 100 or the suitably shaped chuck 120, or portion thereof, to thereby position the accessory holder 30 relative to the drill 100 whereby the drill bit 20 or other accessory held by the accessory holder 30 is positioned for in use connection to the drill 100. In this way, the drill engagement means 40A may function to enable the axis of rotation of the chuck 120 to be aligned with the central longitudinal axis of the accessory holder 30. Where the accessory holder 30 contains an accessory such as a drill bit 20, the engagement means may function to enable the axis of rotation of the chuck 120 and a central longitudinal axis of the drill bit 20 held by the accessory holder 30 to be aligned.

Similar to the embodiment illustrated in Figures 1 to 6, in the embodiment illustrated in Figures 7 to 10 the plurality of triangular shaped projections 42A that are upstanding from the end face 12, 14 of the apparatus 10 are configured to be insertable into the nose portion 110 of the drill 100 such that outwardly facing surfaces 43A of the projections 42A locate against the chuck facing surface 112 of the nose portion 110 of the drill 100. The plurality of triangular shaped projections 42A are also configured to cooperate with another form of the nose portion 110 of the drill 100 (not shown), which may have a smaller diameter than the nose portion 110 illustrated in Figures 3 to 6, such that inwardly facing surfaces 45A of the projections 42A locate against an outwardly facing surface 113 of the nose portion 110 of the drill 100. The result of the inwardly facing surfaces 45A of the projections 42A locating against an outwardly facing surface 113 of the nose portion 110 of the drill 100 is that the axis of rotation of the chuck 120 is aligned, in an accurate manner, in a predetermined orientation and position relative to the accessory holder 30.

Each one of the drill engaging means 40A includes a central opening 48A through the planar base portion 44A that is configured to be aligned with a respective one of the openings 32 of each accessory holder 30. The planar base portion 44A includes a lower surface 46A and an upper surface 47A. The lower surface 46A is configured to be positioned in face to face engagement with a respective one of the end faces 12, 14 and about the opening 32. The lower surface 46A has a plurality of lugs 49A extending therefrom. Each one of the lugs 49A extends through one of a plurality of apertures 13A positioned about the opening 32 in a respective one of the end faces 12, 14. When the lug 49A extends through the aperture 13A it engages the aperture in a snap-fit arrangement so as to retain the lower surface 46A of the base portion 44A in face to face engagement with the respective one of the end faces 12, 14. When the base portion 44A is engaged in face to face engagement with the respective one of the end faces 12, 14 it covers the recesses 41 A surrounding the opening 32. In so doing, the lower surface 46A of the base portion 44A retains the supporting end 31 A of the arms 23A, 24A, 25A in position in the recesses 41 A.

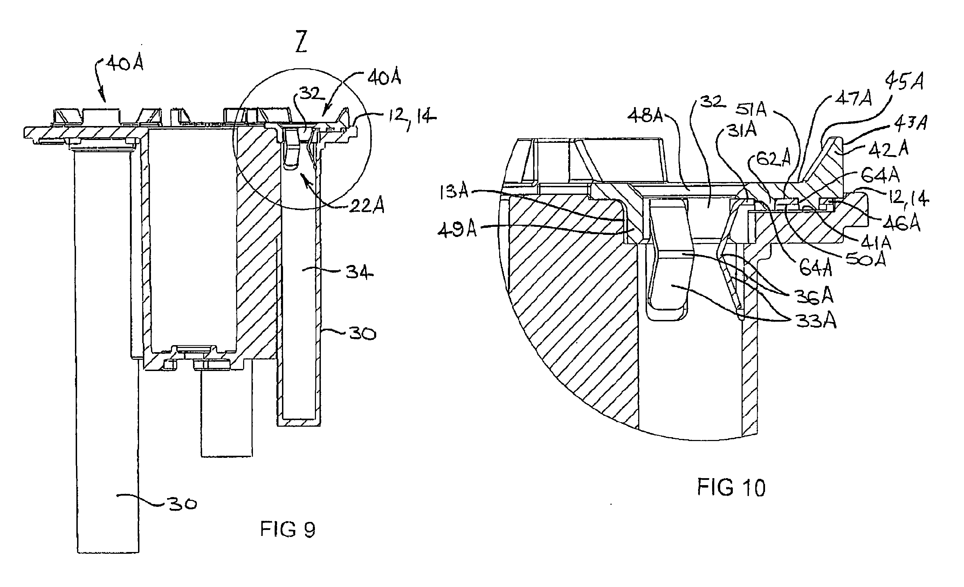

As can be seen in Figure 10, a pair of bosses 62A project from the lower surface 46A of the base portion 44A. The bosses 62A are configured to be received within a corresponding pair of apertures 64A within the supporting end 31 A of the arms 23A, 24A, 25A. Thus, the bosses 62A and the apertures 64A co-operate when the base portion 44A is in position covering the recesses 41 A to help retain the supporting end 31 A of the arms 23A, 24A, 25A in position in the recesses 41 A and prevent excess movement of the 23A, 24A, 25A within the recesses 41 A.

In the embodiment illustrated in Figures 7 to 10 there are three of the arms 23A, 24A, 25A for every accessory gripping member 22A and there is an accessory gripping member 22A for each accessory holder 30. Thus, there are three of the recesses 41 A for each accessory holder 30 to accommodate the supporting ends 31A of each of the three arms 23A, 24A, 25A. The three recesses 41 A are located immediately adjacent to and surrounding the opening 32. When the supporting end 31A of each one of the arms 23A, 24A, 25A is positioned in a respective one of the recesses 41 A in one of the end faces 12, 14 of the apparatus 10 the accessory engaging ends 33A of each of the three arms 23A, 24A, 25A protrudes into the passage 34 of the respective accessory holder 30. The accessory engaging ends 33A of each of the three arms 23A, 24A, 25A also extend substantially parallel to the cylindrical wall 33 and in the direction of the central axis of the passage 34 in a direction away from the opening 32. Although In the embodiment illustrated in Figures 7 to 10 there are three of the arms 23A, 24A, 25A for every accessory gripping member 22A it is possible to have greater or less than three of the arms 23A, 24A, 25A for every accessory gripping member 22A.

The accessory engaging ends 33A of each of the three arms 23A, 24A, 25A each have a kinked region 36A that is adapted to engage against the drill bit 20 upon insertion through the opening 32 into the passage 34. The respective kinked regions 36A of the three arms 23A, 24A, 25A are aligned in the same plane and form a narrowed region within the passage 34 adjacent to the opening 32. The arms 23A, 24A, 25A are resiliently flexible such that when the drill bit 20 or other accessory is inserted through the opening 32 and into the passage 34 the drill bit 20 engages the kinked regions 36A of the three arms 23A, 24A, 25A and forces them apart. Thus, when the drill bit 20 is inserted into the passage 34 the drill bit 20 is held in position in an interference fit between the resiliently flexible arms 23A, 24A, 25A wherein the kinked regions 36A of the three arms 23A, 24A, 25A engage and clamp the drill bit 20 therebetween. Accordingly, the resiliently flexible arms 23A, 24A, 25A drill engaging means 40A is operable to releasably secure the drill bit 20 in position within the passage 34 of the accessory holder 30.

When the drill bit 20 is connected to the drill 100 and one wishes to insert the drill bit 20 into the accessory holder 30 for storage the drill bit 20 is inserted through the opening 32 into the accessory holder 30 while still connected to the drill 10. The chuck 120 is then adjusted to release the drill bit 20 and the accessory gripping member 22, 22A retains the drill bit 20 or other accessory within the accessory holder 30 as the drill 100 is moved away from the apparatus 10. As a result, and the drill bit 20 is retained within the accessory holder 30 and separated from the drill 100.

The gripping member 22, 22A may have another function in assisting to ensure that the drill bit 20 or other accessory is aligned in the accessory holder 30 such that when it is required to connect the drill bit 20 or other accessory to the drill 100 the drill bit 20 or other accessory will be accurately aligned with the axis of rotation of the chuck 120 for connection therewith. Where the drill bit 20 or other accessory has a central longitudinal axis, the gripping member 22, 22A assists in ensuring that the central longitudinal axis of drill bit 20 or other accessory is aligned in the accessory holder 30 such that when it is required to connect the drill bit 20 or other accessory to the drill 100 the axis of the drill bit 20 or other accessory will be accurately aligned with the axis of rotation of the chuck 120 for connection therewith.

The drill 100 illustrated in Figures 1 to 6 has a housing 105 incorporating a nose portion 110 which is an extension of the housing 105 that surrounds the chuck 120 and the jaws 122 thereof. This nose portion 110 can act as a grip when the drill 100 is in use. It can also act as a guard for preventing body parts, hair or clothing from being caught in the moving parts of the drill 100 or to protect the surrounding material of the work piece or other materials from damage from the spinning chuck 120 when the drill 100 is in use. The nose portion 110 is also particularly suitable for use in relation to the preferred form of the apparatus 10 of the invention. As mentioned above the shaping of the nose portion 110, in particular the annular end face 114 and the chuck facing surface 112 are specifically configured for use in relation to the apparatus 10 described and illustrated herein.

Another feature of the drill 100 illustrated herein is that it features a chuck adjust mode which may be selected by the user such that operation of the drill 100 in the forward and reverse directions causes the chuck 120 to be adjusted in the two manners described above, namely for gripping and release of the drill bit 20, without the user having to grip or otherwise touch the chuck 120 or any part thereof. Thus, when the drill 100 is used with the apparatus 10 the user may select the chuck adjust mode and insert the shank of the drill bit 20 held by the apparatus 10 into the chuck 120 without having to directly hold the drill bit 20 and by simply activating the drill 100 cause the chuck 120 to grip the drill bit 20. The user can then switch the drill 100 from the chuck adjust mode so that the drill 100 and the drill bit 20 can be used for drilling. Similarly, when it is desired to store the drill bit 20 in the apparatus, the chuck adjust mode can be selected for the drill 100, the drill bit 20 can be inserted into the accessory holder 30 of the apparatus 10 and by activating the drill 100 in the reverse direction the drill bit 20 can be released while it is retained by the apparatus 10.

It will be appreciated that when the drill 100 incorporating the chuck adjust mode, such as described above, is used with the apparatus 10, in the process of connecting and disconnecting the chuck 120 and the drill bit 20 or other accessory, the chuck 120 and/or the drill bit 20 may rotate within the accessory holder 30 of the apparatus 10. Accordingly, it is envisaged that the apparatus 10 may include a wear resistant material located about the opening 32 to counter wear due to contact between the apparatus 10 and the rotating chuck 120. Similar wear resistant material may also be applied to the cylindrical wall 33 of the passage 34 of the accessory holder to counter wear due to contact between the cylindrical wall 33 and the rotating drill bit 20 when the drill bit 20 rotates within the accessory holder 30.

When the apparatus 10 is used with a drill 100 of the type illustrated herein a user may connect the drill bit 20 or other accessory to the drill 100 without having to handle either the drill bit 20 or the chuck 120. This is advantageous from a safety perspective, particularly when compared with existing means for connecting drill bits or other accessories to existing drills.. When connecting drill bits to existing drills it is necessary to hold the drill bit in position and with the same hand simultaneously grip the chuck to apply a resistance force to the chuck. The user must also simultaneously, and with the other hand, activate the drill so that the head portion of the chuck will rotate relative to the adjustment nut such that the gripping faces of the jaws move towards the axis of rotation of the chuck and project outwardly relative to the head portion and grip the shank of the drill bit therebetween. Such existing drill arrangements are inherently unsafe as the hand holding the drill bit and the chuck can be injured due to rotation thereof when the drill is activated to adjust the chuck. Conversely, as mentioned above, when the apparatus 10 of the present invention is used with a drill 100 of the type illustrated herein, or any other suitable drill, a user may disconnect the drill bit 20 and the chuck 120 when disconnecting the drill bit 20 from the drill 100 without needing to handle the drill bit 20.

When the type of drill (not shown) requires a user to hold the chuck 120 by hand while the drill is activated in the forward or reverse direction to adjust the chuck then the apparatus 10 at least does away with a user having to hold the drill bit 20. Accordingly, the user need not hold the drill bit 20 when connecting the drill bit 20 to the drill. This reduces the likelihood of a user being injured as a result of contact between the user's hand and the drill bit 20 when the drill bit 20 rotates in the process of being connected to the chuck. A similar advantage applies where the drill is of a kind which involves the use of a key or like device (not shown) to adjust the chuck. That advantage being that the user does not need to handle the drill bit 20 or other accessory in position relative to the drill while adjusting the chuck with a key or another like chuck adjusting means. It is also envisaged that the apparatus 10 may include means that are co-operable with the chuck of existing drills that require a key or a user to grip the chuck in order to adjust the chuck. In this form, the apparatus 10 includes means that are co-operable with the chuck of the drill to facilitate adjustment of the chuck and connection of the drill bit 20 or other accessory located in the accessory holder 30 to the chuck. Likewise the same means may be co-operable with the chuck when the user wishes disconnect the drill bit 20 or other accessory from the chuck for storage in the accessory holder 30. The co-operable means are advantageous in that they do away with having to hold the chuck by hand or use a key or like device to adjust the chuck.

Embodiments of the invention described and illustrated herein are in the context of an accessory in the form of the drill bit 20 which has a shank having a circular cross section. Because the drill bit 20 has a shank with a circular cross section the drill bit 20 the jaws 122 of the chuck 120 must apply a clamping force in order to grip the drill bit 20 therebetween. However, it is to be appreciated that the present invention may have beneficial application in relation to accessories which have a shank that does not have a circular cross section. For example, the accessory may have a portion for co-operation with the chuck 120 which has a square or hexagonal shaped cross section such as is commonly the case for screwdriver bits and the like used with cordless screwdrivers, impact drivers, drywall screwdrivers and like tools.

Although not illustrated in the drawings it is envisaged that the apparatus 10 may also include a means for cleaning the drill bit 20 or other accessory when it is received by and/or removed from the accessory holder 30. One form of the means for cleaning the accessory includes bristles disposed adjacent to the opening 32 of one or more of the accessory holders 30. When the drill bit 20 has accumulated debris from use and is inserted through the opening 32 into the accessory holder 30 the bristles sweep the debris from the surface of the drill bit 20 including from crevices on the surface of the drill bit 20. In this way the amount of built up debris inside the apparatus 10 resulting from repeated insertion of the drill bits 20 is reduced.

The nose portion 110 may include a means for connection with an accessory for use with the drill 100. The nose portion 110 of the drill 100 illustrated in the drawings has the chuck facing surface 112 of truncated cone shaped which increases in diameter as it approaches the annular end face 114. It is envisaged that the chuck facing surface 112 may have a shape or configuration that is suitable for the attachment of accessories thereto. For example, the chuck facing surface 112 may be threaded so as to facilitate the connection of an accessory having a complementary thread for threaded connection therebetween. The provision of the thread or any other suitable shape or configuration on the chuck facing surface 112 is advantageous in that it facilitates the connection of accessories to the drill in the vicinity of the nose portion 110 surrounding the chuck 120 and the jaws 122 thereof. The accessory may include any one or more of the group including a levelling accessory, a lighting accessory, an alignment accessory, a metal detecting accessory and a plunge control accessory but is not limited to only these kinds of accessories.

## Claims

1. An apparatus (10) for facilitating an in use connection of an accessory (20) and a drill (100), the apparatus including:
a plurality of accessory holders (30), each accessory holder for holding an accessory (20);
a plurality of drill engaging means (40), each one of the drill engaging means being adapted for engaging a drill (100) and for positioning a respective one of the accessory holders (30) relative to the drill (100) whereby the accessory (20) held by the accessory holder (30) is positioned for in use connection to the drill (100)
the apparatus **characterized by**:
an end face including a plurality of openings, each opening for insertion and withdrawal of an accessory therethrough, each one of the accessory holders extending from a respective one of the openings in the end face.

2. The apparatus of claim 1, **characterized in that** each one of the drill engaging means (40) is adapted to engage the drill (100) for positioning a respective one of the accessory holders (30) in a predetermined orientation relative to the drill (100).

3. The apparatus of either claim 1 or 2, wherein at least one of the accessory holders (30) is a drill bit holder (30) configured for holding a drill bit (20) having an axis and **characterized in that** the corresponding drill engaging means (40) is adapted to engage the drill (100) for positioning the accessory holder (30) relative to a rotatable chuck (120) of the drill (100) whereby the drill bit (20) held by the drill bit holder (30) is positioned with the axis of the drill bit in alignment with an axis of rotation of the chuck (120).

4. The apparatus of any one of the preceding claims, **characterized in that** each one of the drill engaging means (40) is adapted to engage a housing (105) of the drill (100).

5. The apparatus of any one of the preceding claims, **characterized in that** each one of the drill engaging means (40) is adapted to engage a nose portion (110) of the drill (100).

6. The apparatus of any one of the preceding claims, wherein each one of the accessory holders (30) has an axis and **characterized in that** the corresponding drill engaging means (40) is disposed radially to the axis of the accessory holder (30).

7. The apparatus of any one of the preceding claims, **characterized in that** each one of the drill engaging means (40) includes projections (42) disposed around the opening (32) of the respective accessory holder (30).

8. The apparatus of claim 7, **characterized in that** the apparatus (10) has two opposing ends (12, 14) and the openings (32) are at either end of the apparatus (10).

9. The apparatus of claim 8, **characterized in that** the apparatus (10) includes a plurality of radially positioned accessory holders (30) and alternate accessory holders (30) have their openings (32) at each of the ends (12, 14) of the apparatus (10).

10. The apparatus of any one of the preceding claims, **characterized by** further including an accessory retaining member (5) for preventing unwanted removal of the accessories (20) from the accessory holders (30).

11. The apparatus of any one of the preceding claims, **characterized in that** the apparatus (10) includes at least one sharpening means for sharpening a corresponding accessory (20).

12. The apparatus of any one of the preceding claims, **characterized by** further including at least one means for cleaning a corresponding accessory when the accessory (20) is moved relative to its accessory holder (30).

13. The apparatus of claim 12, **characterized in that** each one of the means for cleaning a corresponding accessory cleans the accessory (20) when the accessory (20) is received by or removed from its accessory holder (30) and includes bristles disposed adjacent to the opening (32) of the accessory holder (30).

14. A combination of a drill (100) and the apparatus (10) of any one of the preceding claims, **characterized in that** the drill (100) is engageable by the drill engaging means (40) of the apparatus (10) for positioning a respective one of the accessory holders (30) relative to the drill (100) whereby the accessory (20) held by the accessory holder (30) is positioned for in use connection to the drill (100), wherein the drill (100) has a housing (105) that is engageable by the drill engaging means (40) at a portion of the housing located adjacent to a rotatable chuck (120) of the drill (100), wherein the portion of the housing located adjacent to the rotatable chuck (120) of the drill is an extension (110) of the housing (105) that surrounds the chuck (120).

## Patentansprüche

1. Eine Vorrichtung (10) zur Erleichterung einer Verbindung eines Zubehörteils (20) und einer Bohrmaschine (100) während des Gebrauchs, die Vorrichtung umfassend:
eine Vielzahl von Zubehörteilhaltern (30), jeder Zubehörteilhalter zum Halten eines Zubehörteils (20);
eine Vielzahl von an der Bohrmaschine angreifenden Mitteln (40), jedes der an der Bohrmaschine angreifenden Mittel angepasst, um an einer Bohrmaschine (100) anzugreifen, und um einen jeweiligen der Zubehörteilhalter (30) relativ zu der Bohrmaschine (100) zu positionieren, wobei das von dem Zubehörteilhalter (30) gehaltene Zubehörteil (20) für eine Verbindung zu der Bohrmaschine (100) während des Gebrauchs positioniert ist,
die Vorrichtung **gekennzeichnet durch**:
eine Endfläche, die eine Vielzahl von Öffnungen einschließt, jede Öffnung zur Einführung und Entnahme eines Zubehörteils **durch** sie hindurch, wobei jeder der Zubehörteilhalter sich von einer jeweiligen der Öffnungen in der Endfläche aus erstreckt.

2. Die Vorrichtung von Anspruch 1, **dadurch gekennzeichnet, dass** jedes der an der Bohrmaschine angreifenden Mittel (40) angepasst ist, um an der Bohrmaschine (100) anzugreifen, um einen jeweiligen der Zubehörteilhalter (30) in einer vorbestimmten Orientierung relativ zu der Bohrmaschine (100) zu positionieren.

3. Die Vorrichtung von entweder Anspruch 1 oder Anspruch 2, wobei wenigstens einer der Zubehörteilhalter (30) ein Bohrerhalter (30) gestaltet zum Halten eines Bohrers (20) mit einer Achse ist, und **dadurch gekennzeichnet, dass** das entsprechende an der Bohrmaschine angreifende Mittel (40) angepasst ist, um an der Bohrmaschine (100) anzugreifen, um den Zubehörteilhalter (30) relativ zu einem rotierbaren Bohrfutter (120) der Bohrmaschine (100) zu positionieren, wobei der vom Bohrerhalter (30) gehaltene Bohrer (20) mit der Achse des Bohrers in Ausrichtung mit einer Rotationsachse des Bohrfutters (120) positioniert ist.

4. Die Vorrichtung irgendeines der vorhergegangenen Ansprüche, **dadurch gekennzeichnet, dass** jedes der an der Bohrmaschine angreifenden Mittel (40) angepasst ist, um an einem Gehäuse (105) der Bohrmaschine (100) anzugreifen.

5. Die Vorrichtung irgendeines der vorhergegangenen Ansprüche, **dadurch gekennzeichnet, dass** jedes der an der Bohrmaschine angreifenden Mittel (40) angepasst ist, um an einem Nasenstück (110) der Bohrmaschine (100) einzugreifen.

6. Die Vorrichtung irgendeines der vorhergegangenen Ansprüche, wobei jeder der Zubehörteilhalter (30) eine Achse hat, und **dadurch gekennzeichnet, dass** das entsprechende an der Bohrmaschine angreifende Mittel (40) radial zu der Achse des Zubehörteilhalters (30) angeordnet ist.

7. Die Vorrichtung irgendeines der vorhergegangenen Ansprüche, **dadurch gekennzeichnet, dass** jedes der an der Bohrmaschine angreifenden Mittel (40) um die Öffnung (32) des jeweiligen Zubehörteilhalters (30) angeordnete Vorsprünge (42) umfasst.

8. Die Vorrichtung von Anspruch 7, **dadurch gekennzeichnet, dass** die Vorrichtung (10) zwei gegenüberliegende Enden (12, 14) hat und die Öffnungen (32) an beiden Enden der Vorrichtung (10) sind.

9. Die Vorrichtung von Anspruch 8, **dadurch gekennzeichnet, dass** die Vorrichtung (10) eine Vielzahl radial positionierter Zubehörteilhalter (30) umfasst und alternierende Zubehörteilhalter (30) ihre Öffnungen (32) an beiden der Enden (12, 14) der Vorrichtung (10) haben.

10. Die Vorrichtung irgendeines der vorhergegangenen Ansprüche, **gekennzeichnet durch** das weitere Einschließen eines Zubehörteil-zurückhaltenden Elements (5), um ungewollte Entfernung der Zubehörteile (20) aus den Zubehörteilhaltern (30) zu verhindern.

11. Die Vorrichtung irgendeines der vorhergegangenen Ansprüche, **dadurch gekennzeichnet, dass** die Vorrichtung (10) wenigstens ein Schärfungsmittel umfasst, um ein entsprechendes Zubehörteil (20) zu schärfen.

12. Die Vorrichtung irgendeines der vorhergegangenen Ansprüche, **gekennzeichnet durch** das weitere Einschließen wenigstens eines Mittels zur Reinigung eines entsprechenden Zubehörteils, wenn das Zubehörteil (20) relativ zu seinem Zubehörteilhalter (30) bewegt wird.

13. Die Vorrichtung von Anspruch 12, **dadurch gekennzeichnet, dass** jedes der Mittel zur Reinigung eines entsprechenden Zubehörteils das Zubehörteil (20) reinigt, wenn das Zubehörteil (20) von seinem Zubehörteilhalter (30) empfangen oder aus ihm entfernt wird, und angrenzend an die Öffnung (32) des Zubehörteilhalters (30) angeordnete Borsten einschließt.

14. Eine Kombination einer Bohrmaschine (100) und der Vorrichtung (10) irgendeines der vorhergegangenen Ansprüche, **dadurch gekennzeichnet, dass** die Bohrmaschine (100) durch das an der Bohrmaschine angreifende Mittel (40) der Vorrichtung (10) angreifbar ist, um einen jeweiligen der Zubehörteilhalter (30) relativ zu der Bohrmaschine (100) zu positionieren, wodurch das von dem Zubehörteilhalter (30) gehaltene Zubehörteil (20) für eine Verbindung zu der Bohrmaschine (100) während des Gebrauchs positioniert ist, wobei die Bohrmaschine (100) ein Gehäuse (105) hat, das durch das an der Bohrmaschine angreifende Mittel (40) an einem Teil des Gehäuses, der angrenzend zu dem rotierbaren Bohrfutter (120) der Bohrmaschine (100) lokalisiert ist, angreifbar ist, wobei der Teil des Gehäuses, der angrenzend zu dem rotierbaren Bohrfutter (120) der Bohrmaschine lokalisiert ist, eine Verlängerung (110) des Gehäuses (105) ist, das das Bohrfutter (120) umgibt.

## Revendications

1. Appareil (10) pour faciliter un branchement en cours d'utilisation d'un accessoire (20) et d'une perceuse (100), l'appareil comprenant :
une pluralité de porte-accessoire (30), chaque porte-accessoire étant destiné à porter un accessoire (20) ;
une pluralité de moyens de mise en prise de perceuse (40), chacun des moyens de mise en prise de perceuse étant adapté pour se mettre en prise avec une perceuse (100) et pour positionner un porte-accessoire respectif des porte-accessoire (30) par rapport à la perceuse (100), moyennant quoi l'accessoire (20) porté par le porte-accessoire (30) est positionné pour pouvoir être branché en cours d'utilisation à la perceuse (100)
l'appareil étant **caractérisé par** :
une face d'extrémité comprenant une pluralité d'ouvertures, chaque ouverture permettant l'insertion et le retrait d'un accessoire à travers elle, chacun des porte-accessoire s'étendant à partir d'une ouverture respective des ouvertures dans la face d'extrémité.

2. Appareil selon la revendication 1, **caractérisé en ce que** chacun des moyens de mise en prise de perceuse (40) est adapté pour se mettre en prise avec la perceuse (100) pour positionner un porte-accessoire respectif des porte-accessoire (30) dans une orientation prédéterminée par rapport à la perceuse (100).

3. Appareil selon la revendication 1 ou 2, dans lequel au moins un des porte-accessoire (30) est un porte-foret (30) configuré pour porter un foret (20) ayant un axe et **caractérisé en ce que** le moyen de mise en prise de perceuse (40) correspondant est adapté pour se mettre en prise avec la perceuse (100) pour positionner le porte-accessoire (30) par rapport à un mandrin rotatif (120) de la perceuse (100), moyennant quoi le foret (20) porté par le porte-foret (30) est positionné avec l'axe du foret en alignement avec un axe de rotation du mandrin (120).

4. Appareil selon l'une quelconque des revendications précédentes, **caractérisé en ce que** chacun des moyens de mise en prise de perceuse (40) est adapté pour se mettre en prise avec un logement (105) de la perceuse (100).

5. Appareil selon l'une quelconque des revendications précédentes, **caractérisé en ce que** chacun des moyens de mise en prise de perceuse (40) est adapté pour se mettre en prise avec une partie de nez (110) de la perceuse (100).

6. Appareil selon l'une quelconque des revendications précédentes, dans lequel chacun des porte-accessoire (30) a un axe et **caractérisé en ce que** le moyen de mise en prise de perceuse (40) correspondant est disposé radialement par rapport à l'axe du porte-accessoire (30).

7. Appareil selon l'une quelconque des revendications précédentes, **caractérisé en ce que** chacun des moyens de mise en prise de perceuse (40) comprend des saillies (42) disposées autour de l'ouverture (32) du porte-accessoire (30) respectif.

8. Appareil selon la revendication 7, **caractérisé en ce que** l'appareil (10) présente deux extrémités opposées (12, 14) et les ouvertures (32) se trouvent à l'une ou l'autre extrémité de l'appareil (10).

9. Appareil selon la revendication 8, **caractérisé en ce que** l'appareil (10) comprend une pluralité de porte-accessoire positionnés radialement (30) et les porte-accessoire (30) alternés ont leurs ouvertures (32) à chacune des extrémités (12, 14) de l'appareil (10).

10. Appareil selon l'une quelconque des revendications précédentes, **caractérisé en ce qu'**il comprend en outre un élément de maintien d'accessoires (5) pour prévenir un retrait indésirable des accessoires (20) des porte-accessoire (30).

11. Appareil selon l'une quelconque des revendications précédentes, **caractérisé en ce que** l'appareil (10) comprend au moins un moyen d'affûtage pour affûter un accessoire (20) correspondant.

12. Appareil selon l'une quelconque des revendications précédentes, **caractérisé en ce qu'**il comprend en outre au moins un moyen pour nettoyer un accessoire correspondant lorsque l'accessoire (20) est déplacé par rapport à son porte-accessoire (30).

13. Appareil selon la revendication 12, **caractérisé en ce que** chacun des moyens pour nettoyer un accessoire correspondant nettoie l'accessoire (20) lorsque l'accessoire (20) est reçu par le porte-accessoire (30) ou retiré de celui-ci, et comprend des poils disposés de façon adjacente à l'ouverture (32) du porte-accessoire (30).

14. Combinaison d'une perceuse (100) et de l'appareil (10) selon l'une quelconque des revendications précédentes, **caractérisée en ce que** la perceuse (100) peut être mise en prise par les moyens de mise en prise de perceuse (40) de l'appareil (10) pour positionner un porte-accessoire respectif des porte-accessoire (30) par rapport à la perceuse (100), moyennant quoi l'accessoire (20) porté par le porte-accessoire (30) est positionné pour pouvoir être branché en cours d'utilisation à la perceuse (100), dans laquelle la perceuse (100) possède un logement (105) qui peut être mis en prise par les moyens de mise en prise de perceuse (40) au niveau d'une partie du logement située de façon adjacente à un mandrin rotatif (120) de la perceuse (100), dans laquelle la partie du logement située de façon adjacente au mandrin rotatif (120) de la perceuse est un prolongement (110) du logement (105) qui entoure le mandrin (120).
